# EUROPEAN PATENT APPLICATION

(11) **EP 4 152 643 A1**
(43) Date of publication of application: **22.03.2023**
(21) Application number: 22195560.2
(22) Date of filing: 14.09.2022
(51) Int. Cl.: H04B 7/185

(54) **TIMING SYNCHRONIZATION FOR HANDOVER IN NON-TERRESTRIAL NETWORK COMMUNICATIONS**

(30) Priority: 17.09.2021 US 202163245233 P; 14.07.2022 US 202217865147
(71) Applicant: MediaTek Singapore Pte. Ltd., Singapore 138628 (SG)
(72) Inventor: MEDLES, Abdelkader, Cambourne, Cambridge, CB23 6DW (GB); KUNT, Mehmet, Cambourne, Cambridge, CB23 6DW (GB); JOSE, Pradeep, Cambourne, Cambridge, CB23 6DW (GB); CHARBIT, Gilles, Cambourne, Cambridge, CB23 6DW (GB); ROY, Abhishek, San Jose, CA, 95134 (US)
(74) Representative: Hoefer & Partner Patentanwälte mbB

(57) **Abstract**

Various solutions for uplink synchronization in non-terrestrial network, NTN, communications are proposed. An apparatus implemented in a user equipment, UE, receives a system information block, SIB, of a target cell via a non-terrestrial, NT, network node of the NTN (310). The apparatus obtains an explicit epoch time from the SIB of the target cell (320). Then, the apparatus performs an uplink, UL, synchronization with the target cell through adjusting an uplink transmit time according to the explicit epoch time (330).

## Description

### CROSS REFERENCE TO RELATED PATENT APPLICATION(S)

The present disclosure is part of a non-provisional application claiming the priority benefit of U.S. Provisional Patent Application No. 63/245,233, filed 17 September 2021, the content of which being incorporated by reference in its entirety.

### TECHNICAL FIELD

The present disclosure is generally related to mobile communications and, more particularly, to timing synchronization for handover in non-terrestrial network (NTN) communications.

### BACKGROUND

Unless otherwise indicated herein, approaches described in this section are not prior art to the claims listed below and are not admitted as prior art by inclusion in this section.

There is increasing interest and participation in 3GPP from the satellite communication industry, with companies and organizations convinced of the market potential for an integrated satellite and terrestrial network infrastructure in the context of 3GPP 5G. Satellites refer to Spaceborne vehicles in Low Earth Orbits (LEO), Medium Earth Orbits (MEO), Geostationary Earth Orbit (GEO) or in Highly Elliptical Orbits (HEO). 5G standards make Non-Terrestrial Networks (NTN)-including satellite segments-a recognized part of 3GPP 5G connectivity infrastructure. A low Earth orbit is an Earth-centered orbit with an altitude of 2,000 km or less, or with at least 11.25 periods per day and an eccentricity less than 0.25. Most of the manmade objects in outer space are in LEO. LEO satellites orbit around the earth at a high speed (mobility), but over a predictable or deterministic orbit.

In 4G Long-Term Evolution (LTE) and 5G new radio (NR) networks, an evolved universal terrestrial radio access network (E-UTRAN) includes a plurality of base stations, e.g., evolved Node-Bs (eNodeBs) communicating with a plurality of mobile stations referred as user equipment (UEs). In 5G New Radio (NR), the base stations are also referred to as gNodeBs or gNBs. For UEs in RRC Idle mode mobility, cell selection is the procedure through which a UE selects a specific cell for initial registration after power on, and cell reselection is the mechanism to change cell after UE is camped on a cell and stays in idle mode. For UEs in RRC Connected mode mobility, handover is the procedure through which a UE hands over an ongoing session from the source gNB to a neighboring target gNB.

Mobility in LEO satellite-based NTN can be quite different from terrestrial networks. In terrestrial networks, cells are fixed but UEs may move in different trajectories. On the other hand, in NTN, most of the LEO satellites travel at some speed relative to the earth's ground, while the UE movements are relatively slow and negligible. For LEO satellites, the cells are moving over time, albeit in a predictable manner. Hence, LEO satellites can estimate the target cell based on its own movement speed, direction and height from the ground, instead of relying on UE's measurement reports. Once the LEO satellite moves to a new cell, most (if not all) of the UEs will be handed over to the same target cell. The network can estimate UEs' locations by using Global Navigation Satellite System (GNSS) or by capturing location information from the core networks.

Handover process in NR-based LEO-NTN involve frequent, periodic handover messages. Naturally, UE's measurement-report (MR) based traditional handover will incur frequent, heavy signaling overhead as the network needs to process MR, trigger HO decision and continue HO signaling in every few seconds. System information block (SIB) may be used in NTN for serving satellite/gNB synchronization. NTN synchronization SIB will contain ephemeris information such as satellite position vector, satellite velocity vector, orbital parameters.

During handover, in order to reduce the interruption, the UE is not expected to decode the SIB information. The satellite-assisted system information broadcast on SIB is provided to the UE through the radio resource control (RRC) configuration during handover procedure. However, if the target cell is NTN and if the NTN SIB uses implicit time reference for the validity of the content or epoch time, which requires DL reception, then forwarding the NTN SIB as it is will not allow the UE to synchronize its UL and transmit the RACH preamble. Hence, the time information of target cell needs to be explicitly forwarded to the UE before handover process in NR-NTN is initiated.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to propose solutions or schemes that address the aforementioned issues. More specifically, various schemes proposed in the present disclosure are believed to address issues pertaining to uplink synchronization with target cell during handover procedure in NTN communications. Methods and apparatus according to the present invention are defined in the independent claims. The dependent claims define preferred embodiments thereof.

In one aspect, a method may involve an apparatus obtaining a carrier frequency of a non-terrestrial network (NTN). The method may also involve the apparatus receiving a system information block (SIB) of a target cell via a non-terrestrial (NT) network node of a non-terrestrial network (NTN). The method may also involve the apparatus obtaining an explicit epoch time from the SIB of the target cell. The method may also involve the apparatus performing an uplink (UL) synchronization with the target cell through adjusting an uplink transmit time according to the explicit epoch time.

In another aspect, an apparatus may include a transceiver and a processor coupled to the transceiver. The transceiver may be configured to wirelessly communicate with a non-terrestrial network (NTN). The processor may be configured to receive, via the transceiver, a system information block (SIB) of a target cell via a non-terrestrial (NT) network node of a non-terrestrial network (NTN). The processor may also obtain an explicit epoch time from the SIB of the target cell. The processor may also perform an uplink (UL) synchronization with the target cell through adjusting an uplink transmit time according to the explicit epoch time.

In another aspect, an apparatus may include a transceiver and a processor coupled to the transceiver. The transceiver may be configured to wirelessly communicate with a non-terrestrial network (NTN). The processor may be configured to receive, via the transceiver, a system information block (SIB) from a target cell via a non-terrestrial (NT) network node of a non-terrestrial network (NTN). The processor may also decode the SIB to obtain an explicit epoch time of the target cell before completing a handover procedure. The processor may also perform an uplink (UL) synchronization with the target cell through adjusting an uplink transmit time according to the explicit epoch time.

It is noteworthy that, although description provided herein may be in the context of certain radio access technologies, networks and network topologies such as Long-Term Evolution (LTE), LTE-Advanced, LTE-Advanced Pro, 5th Generation (5G), New Radio (NR), Internet-of-Things (loT), Narrow Band Internet of Things (NB-IoT), Industrial Internet of Things (IIoT), non-terrestrial network (NTN) and 6th Generation (6G), the proposed concepts, schemes and any variation(s)/derivative(s) thereof may be implemented in, for and by other types of radio access technologies, networks and network topologies. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram of an example network environment in which various proposed schemes in accordance with the present disclosure may be implemented.
FIG. 2 is a block diagram of an example communication system in accordance with an implementation of the present disclosure.
FIG. 3 is a flowchart of an example process in accordance with an implementation of the present disclosure.
FIG. 4 is a flowchart of an example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to uplink synchronization with target cell during handover procedure in NTN communications. According to the present disclosure, a number of possible solutions may be implemented separately or jointly. That is, although these possible solutions may be described below separately, two or more of these possible solutions may be implemented in one combination or another.

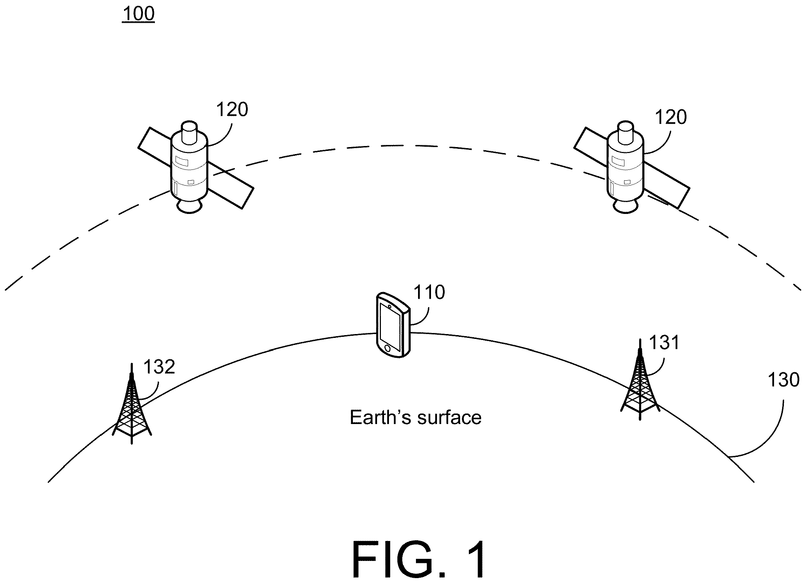

FIG. 1 illustrates an exemplary network environment 100 that supports efficient handover procedure in Low Earth Orbit (LEO) Non-Terrestrial Network (NTN) in accordance with the present disclosure may be implemented. NR wireless communication system 100 involves at least one non-terrestrial (NT) network node 120 (e.g., a satellite), at least one user equipment (UE) 110, and a plurality of terrestrial network nodes 131, 132 (e.g., a gateway, base station, eNB, gNB or transmission/reception point (TRP)), which may be a part of a wireless communication network (e.g., an LTE network, a 5G network, an NR network, an loT network, an NB-IoT network, an IIoT network, an NTN network or a 6G network).

UE 110 may be far from terrestrial network nodes 131, 132 (e.g., not within the communication range of terrestrial network nodes 131, 132) and not able to communicate with terrestrial network nodes 131, 132 directly. Via NTN, UE 110 may be able to transmit/receive signals to/from NT network node 120. NT network node 120 may relay/transfer signals/data from UE 110 to one of the terrestrial network nodes 131, 132. Thus, one of the terrestrial network nodes 131, 132 may be able to communicate with UE 110 via NT network node 120. In the example of FIG. 1, the NT network node 120 orbit around the earth at a high speed (mobility), but over a predictable or deterministic orbit, and UE 110 is initially served in a terrestrial network node 131 (hereinafter source cell 131). Once the NT network node 120 moves to a new cell, the UE 110 will be handed over to a terrestrial network node 132 (hereinafter target cell 132).

For NT network node 120, the terrestrial network nodes 131, 132 are moving over time, albeit in a predictable manner. Hence, NT network node 120 can estimate the target cell based on its own movement speed, direction and height from the ground, instead of relying on UE's measurement reports. Once the NT network node 120 moves to a new cell, most (if not all) of the UEs will be handed over to the same target cell. The network can estimate UEs' locations by using Global Navigation Satellite System (GNSS) or by capturing location information from the core networks.

For UE 110 in RRC Connected mode mobility, handover is the procedure through which the UE 110 hands over an ongoing session from the source cell 131 to a neighboring target cell 132. Before handing over to the target cell 132, the UE 110 needs to obtain the system information (e.g., master information block (MIB) and system information block (SIB)) of the target cell 132. SIB maybe used in NTN for synchronization with the terrestrial network nodes 131, 132.

During handover, in order to reduce the interruption, the UE is not expected to decode the SIB. The source cell 131 provides the RRC configuration to the UE 110 by forwarding the *RRCReconfiguration* message received in the HANDOVER REQUEST ACKNOWLEDGE. The *RRCReconfiguration* message includes at least cell ID and all information required to access the target cell 132 so that the UE 110 can access the target cell 132 without reading system information. However, if the SIB uses implicit time reference for the validity of the content or epoch time, then forwarding the NTN SIB as it is will not allow the UE 110 to synchronize its UL to the target cell 132 and transmit the RACH preamble. Under the circumstances, UE 110 may need to a downlink reception for UL timing synchronization.

In view of the above, the present disclosure proposes a number of schemes pertaining to uplink synchronization with target cell during handover procedure in NTN communications with respect to the UE 110, NT network node 120 and terrestrial network node 130. Under various proposed schemes in accordance with the present disclosure, each of the UE 110, the NT network node 120 and the terrestrial network node 130 may be configured to perform operations pertaining to system information block (SIB) and explicit epoch time for uplink synchronization with target cell during handover procedure in NTN communications, as described below.

Under a proposed scheme, UE 110 may receive a SIB of a target cell via the NT network node of NTN. Additionally, UE 110 may obtain an explicit epoch time from the SIB of the target cell. Then, UE 110 may perform UL synchronization with the target cell through adjusting an uplink transmit time according to the explicit epoch time.

In some implementations, UE 110 may obtain the SIB of the target cell 132 from the source cell 131. Specifically, when the NT network node 120 moves to the target cell 132, the target cell 132 may transmit its SIB to the source cell 131. Since the UE 110 is still served by the source cell 131 and in RRC Connected mode, the source cell 131 may transmit RRC configuration signal (e.g., *RRCConfiguration* message) configuring the SIB of the target cell 132 to the NT network node 120. Then, the NT network node 120 will forward the RRC configuration signal to the UE 110.

SIB includes at least the explicit epoch time of the target cell 132 and the satellite ephemeris of the NT network node 120. The satellite ephemeris includes at least one of a satellite position vector, a satellite velocity vector, a feeder link timing advance (TA) parameter, a feeder link delay parameter, a plurality of satellite orbital parameters and trajectory information. The satellite position vector and the satellite velocity vector are in earth-centered, earth-fixed (ECEF) coordinate system or another frame of reference. In some implementations, SIB information can include as well other information such as the feeder link delay or timing advance, but not limited thereto.

The explicit epoch time may be a downlink (DL) timing of the target cell and may include one of a system frame number (SFN), a subframe index, a slot index, a symbol number, coordinated universal time (UTC) or any combinations thereof, but not limited thereto. In some implementations, UL timing may also be used. Once the explicit epoch time is obtained, the UE 110 may synchronize its uplink transmit time with the target cell 132 and perform the handover procedure by handing over from the source cell 131 to the target cell 132 according to the SIB.

Since the UE 110 does not decode the SIB, a handover interruption time during the handover procedure is a sum of at least one of a cell searching time for searching the target cell, an interruption uncertainty time in acquiring a first available PRACH occasion in the target cell, a processing time, a timing information acquiring time, and a synchronization signal block (SSB) post-processing time, and may be calculated as *Tᵢₙₜₑᵣᵣᵤₚₜ* = *T_{search}* + *T_{IU}* + *T_{processing}* + *T*_{Δ} + *T_{margin_ms}. Tᵢₙₜₑᵣᵣᵤₚₜ* denotes the handover interruption time. *T_{search}* denotes the cell searching time which is the time required to search the target cell 132 when the handover command is received by the UE 110. *T_{IU}* denotes the interruption uncertainty time which is the interruption uncertainty in acquiring the first available PRACH occasion in the new cell. *T_{processing}* denotes the processing time for UE processing, and the processing time can be up to 20ms. *T*_{Δ} denotes the timing information acquiring time which is time for fine time tracking and acquiring full timing information of the target cell 132. *T_{margin_ms}* denotes the SSB post-processing time.

Under another proposed scheme, the UE 110 may receive the SIB from the target cell 132 via the NT network node 120. Then, the UE 110 may decode the SIB before completing a handover procedure. In detail, the target cell 132 may broadcast the SIB, and the NT network node 120 forwards the SIB to the UE 110. In order to access the target cell 132, the UE 110 has to decode the SIB. Therefore, the handover interruption time is a sum of at least one of a cell searching time for searching the target cell, an interruption uncertainty time in acquiring a first available PRACH occasion in the target cell, a processing time, a timing information acquiring time, a SIB decoding time, and a synchronization signal block (SSB) post-processing time, and may be calculated as *Tᵢₙₜₑᵣᵣᵤₚₜ* = *T_{search}* + *T_{IU}* + *T_{processing}* + *T*_{Δ} + *T_{SIB}* + *T_{margin_ms}*. *T_{SIB}* denotes the SIB decoding time which is the time for the UE 110 to decode the SIB. The SIB decoding time is determined from a system information scheduling.

### Illustrative Implementations

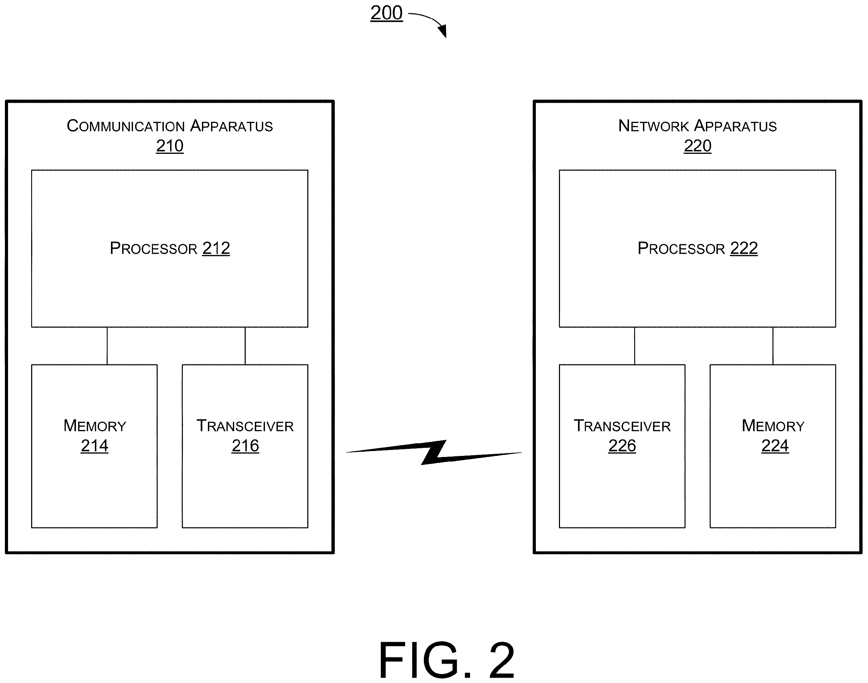

FIG. 2 illustrates an example communication system 200 having an example communication apparatus 210 and an example network apparatus 220 in accordance with an implementation of the present disclosure. Each of communication apparatus 210 and network apparatus 220 may perform various functions to implement schemes, techniques, processes and methods described herein pertaining to system information block (SIB) and explicit epoch time for uplink synchronization with target cell during handover procedure in NTN communications, including scenarios/schemes described above as well as processes 300 and 400 described below.

Communication apparatus 210 may be a part of an electronic apparatus, which may be a UE such as a portable or mobile apparatus, a wearable apparatus, a wireless communication apparatus or a computing apparatus. For instance, communication apparatus 210 may be implemented in a smartphone, a smartwatch, a personal digital assistant, a digital camera, or a computing equipment such as a tablet computer, a laptop computer or a notebook computer. Communication apparatus 210 may also be a part of a machine type apparatus, which may be an loT, NB-IoT, IIoT or NTN apparatus such as an immobile or a stationary apparatus, a home apparatus, a wire communication apparatus or a computing apparatus. For instance, communication apparatus 210 may be implemented in a smart thermostat, a smart fridge, a smart door lock, a wireless speaker or a home control center.

Alternatively, communication apparatus 210 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. Communication apparatus 210 may include at least some of those components shown in FIG. 2 such as a processor 212, for example. Communication apparatus 210 may further include one or more other components not pertinent to the proposed scheme of the present disclosure (e.g., internal power supply, display device and/or user interface device), and, thus, such component(s) of communication apparatus 210 are neither shown in FIG. 2 nor described below in the interest of simplicity and brevity.

Network apparatus 220 may be a part of an electronic apparatus/station, which may be a network node such as a base station, a small cell, a router, a gateway or a satellite. For instance, network apparatus 220 may be implemented in an eNodeB in an LTE, in a gNB in a 5G, NR, 6G, loT, NB-IoT, IIoT, or in a satellite in an NTN network. Alternatively, network apparatus 220 may be implemented in the form of one or more IC chips such as, for example and without limitation, one or more single-core processors, one or more multi-core processors, or one or more RISC or CISC processors. Network apparatus 220 may include at least some of those components shown in FIG. 2 such as a processor 222, for example. Network apparatus 220 may further include one or more other components not pertinent to the proposed scheme of the present disclosure (e.g., internal power supply, display device and/or user interface device), and, thus, such component(s) of network apparatus 220 are neither shown in FIG. 2 nor described below in the interest of simplicity and brevity.

In one aspect, each of processor 212 and processor 222 may be implemented in the form of one or more single-core processors, one or more multi-core processors, or one or more CISC processors. That is, even though a singular term "a processor" is used herein to refer to processor 212 and processor 222, each of processor 212 and processor 222 may include multiple processors in some implementations and a single processor in other implementations in accordance with the present disclosure. In another aspect, each of processor 212 and processor 222 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 212 and processor 222 is a special-purpose machine specifically designed, arranged and configured to perform specific tasks including power consumption reduction in a device (e.g., as represented by communication apparatus 210) and a network (e.g., as represented by network apparatus 220) in accordance with various implementations of the present disclosure.

In some implementations, communication apparatus 210 may also include a transceiver 216 coupled to processor 212 and capable of wirelessly transmitting and receiving data. In some implementations, communication apparatus 210 may further include a memory 214 coupled to processor 212 and capable of being accessed by processor 212 and storing data therein. In some implementations, network apparatus 220 may also include a transceiver 226 coupled to processor 222 and capable of wirelessly transmitting and receiving data. In some implementations, network apparatus 220 may further include a memory 224 coupled to processor 222 and capable of being accessed by processor 222 and storing data therein. Accordingly, communication apparatus 210 and network apparatus 220 may wirelessly communicate with each other via transceiver 216 and transceiver 226, respectively.

Each of communication apparatus 210 and network apparatus 220 may be a communication entity capable of communicating with each other using various proposed schemes in accordance with the present disclosure. To aid better understanding, the following description of the operations, functionalities and capabilities of each of communication apparatus 210 and network apparatus 220 is provided in the context of a mobile communication environment in which communication apparatus 210 is implemented in or as a communication apparatus or a UE (e.g., UE 110) and network apparatus 220 is implemented in or as a network node or base station (e.g., NT network node 120 or terrestrial network node 130) of a communication network (e.g., network 120). It is also noteworthy that, although the example implementations described below are provided in the context of NTN communications, the same may be implemented in other types of networks.

Under various proposed scheme in accordance with the present disclosure pertaining to system information block (SIB) and explicit epoch time for uplink synchronization with target cell during handover procedure in NTN communications, processor 212 of the communication apparatus 210 implemented in or as UE 110 may receive SIB of the target cell via the NT network node of NTN. Processor 212 may obtain, via the transceiver 216, explicit epoch time from the SIB of the target cell. Processor 212 may perform UL synchronization with the target cell through adjusting an uplink transmit time according to the explicit epoch time. The explicit epoch time includes one of a system frame number (SFN), a subframe index, a slot index, a symbol number, coordinated universal time (UTC) or any combinations thereof.

The SIB includes a satellite ephemeris of the NT network node. The satellite ephemeris includes at least one of a satellite position vector, a satellite velocity vector, a feeder link timing advance (TA) parameter, a feeder link delay parameter, a plurality of satellite orbital parameters and trajectory information. The satellite position vector and the satellite velocity vector are in earth-centered, earth-fixed (ECEF) coordinate system or another frame of reference.

In some implementation, processor 212 may receive a radio resource control (RRC) configuration signal configuring the SIB from a source cell.

In some implementation, processor 212 may perform a handover procedure by handing over from the source cell to the target cell according to the SIB

Under various proposed scheme in accordance with the present disclosure pertaining to SIB and explicit epoch time for uplink synchronization with target cell during handover procedure in NTN communications, processor 212 of the communication apparatus 210 implemented in or as UE 110 may receive, via the transceiver, the SIB from the target cell via the NT network node of NTN and decode the SIB to obtain an explicit epoch time of the target cell before completing a handover procedure. The processor may perform UL synchronization with the target cell through adjusting an uplink transmit time according to the explicit epoch time.

The handover interruption time is a sum of at least one of a cell searching time for searching the target cell, an interruption uncertainty time in acquiring a first available PRACH occasion in the target cell, a processing time, a timing information acquiring time, a SIB decoding time, and a synchronization signal block (SSB) post-processing time.

The SIB decoding time is determined from a system information scheduling.

### Illustrative Processes

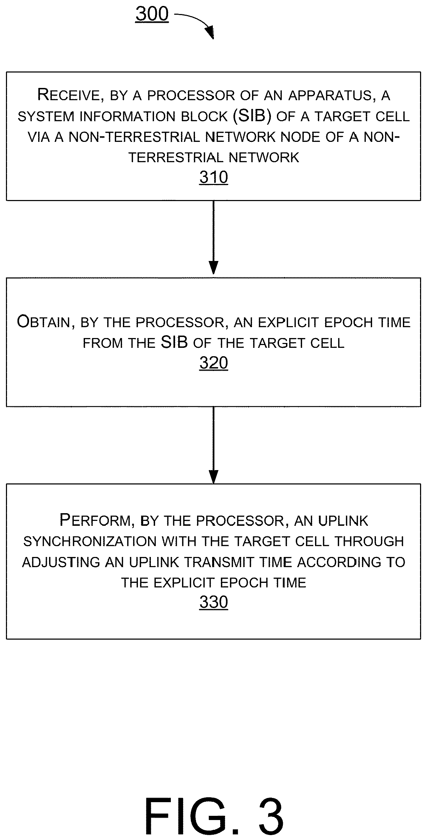

FIG. 3 illustrates an example process 300 in accordance with an implementation of the present disclosure. Process 300 may be an example implementation of schemes described above, whether partially or completely, with respect to the system information block (SIB) and explicit epoch time for uplink synchronization with target cell during handover procedure with the present disclosure. Process 300 may represent an aspect of implementation of features of communication apparatus 210. Process 300 may include one or more operations, actions, or functions as illustrated by one or more of blocks 310, 320, and 330.

Although illustrated as discrete blocks, various blocks of process 300 may be divided into additional blocks, combined into fewer blocks, or eliminated, depending on the desired implementation. Moreover, the blocks of process 300 may executed in the order shown in FIG. 3 or, alternatively, in a different order. Process 300 may be implemented by communication apparatus 210 or any suitable UE or machine type devices. Solely for illustrative purposes and without limitation, process 300 is described below in the context of communication apparatus 210.

Process 300 may begin at block 310. At block 310, process 300 may involve processor 212 of communication apparatus 210 receiving a system information block (SIB) of a target cell via a non-terrestrial (NT) network node of a non-terrestrial network (NTN). Process 300 may proceed from block 310 to block 320.

At block 320, process 300 may involve processor 212 obtaining an explicit epoch time from the SIB of the target cell. Process 300 may proceed from block 320 to block 330.

At block 330, process 300 may involve processor 212 performing an uplink (UL) synchronization with the target cell through adjusting an uplink transmit time according to the explicit epoch time.

In some implementations, in receiving the SIB, process 300 may involve processor 212 performing certain operations. For instance, process 300 may involve processor 212 receiving a radio resource control (RRC) configuration signal configuring the SIB from a source cell.

In some implementations, the explicit epoch time includes one of a system frame number (SFN), a subframe index, a slot index, a symbol number, coordinated universal time (UTC) or any combinations thereof.

In some implementations, the SIB includes a satellite ephemeris of the NT network node. The satellite ephemeris comprises at least one of a satellite position vector, a satellite velocity vector, a feeder link timing advance (TA) parameter, a feeder link delay parameter, a plurality of satellite orbital the satellite position vector and the satellite velocity vector are in earth-centered, earth-fixed (ECEF) coordinate system or another frame of reference. parameters and trajectory information.

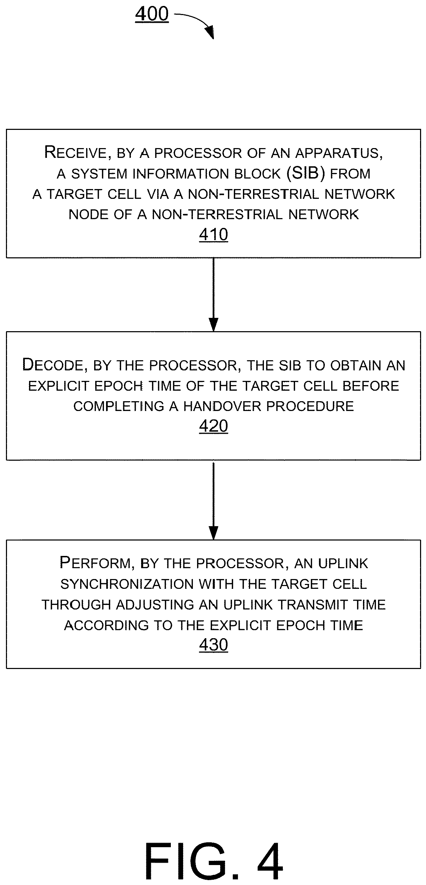

FIG. 4 illustrates an example process 400 in accordance with an implementation of the present disclosure. Process 400 may be an example implementation of schemes described above, whether partially or completely, with respect to the SIB and explicit epoch time for uplink synchronization with target cell during handover procedure with the present disclosure. Process 400 may represent an aspect of implementation of features of communication apparatus 210. Process 400 may include one or more operations, actions, or functions as illustrated by one or more of blocks 410, 420 and 430.

Although illustrated as discrete blocks, various blocks of process 400 may be divided into additional blocks, combined into fewer blocks, or eliminated, depending on the desired implementation. Moreover, the blocks of process 400 may executed in the order shown in FIG. 4 or, alternatively, in a different order. Process 400 may be implemented by communication apparatus 210 or any suitable UE or machine type devices. Solely for illustrative purposes and without limitation, process 400 is described below in the context of communication apparatus 210.

Process 400 may begin at block 410. At block 410, process 400 may involve processor 212 of communication apparatus 210 receiving the SIB from the target cell via the NT network node of the NTN. Process 400 may proceed from block 410 to block 420.

At block 420, process 400 may involve processor 212 decoding the SIB to obtain an explicit epoch time of the target cell before completing a handover procedure. Process 400 may proceed from block 420 to block 430.

At block 430, process 400 may involve processor 212 performing an uplink synchronization with the target cell through adjusting an uplink transmit time according to the explicit epoch time.

In some implementations, a handover interruption time is a sum of at least one of a cell searching time for searching the target cell, an interruption uncertainty time in acquiring a first available PRACH occasion in the target cell, a processing time, a timing information acquiring time, a SIB decoding time, and a synchronization signal block (SSB) post-processing time.

In some implementations, the SIB decoding time is determined from a system information scheduling.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:
receiving, by a processor of an apparatus, a system information block, in the following also referred to as SIB, of a target cell via a non-terrestrial, in the following also referred to as NT, network node of a non-terrestrial network, in the following also referred to as NTN, (310);
obtaining, by the processor, an explicit epoch time from the SIB of the target cell (320); and
performing, by the processor, an uplink, in the following also referred to as UL, synchronization with the target cell through adjusting an uplink transmit time according to the explicit epoch time (330).

2. The method of Claim 1, further comprising:
receiving, by the processor, a radio resource control, in the following also referred to as RRC, configuration signal configuring the SIB from a source cell.

3. The method of Claim 2, further comprising:
performing, by the processor, a handover procedure by handing over from the source cell to the target cell according to the SIB.

4. The method of any one of Claims 1 to 3, wherein the explicit epoch time comprises one of a system frame number, in the following also referred to as SFN, a subframe index, a slot index, a symbol number, coordinated universal time, in the following also referred to as UTC, or any combinations thereof.

5. A method, comprising:
receiving, by a processor of an apparatus, a system information block, in the following also referred to as SIB, from a target cell via a non-terrestrial, in the following also referred to as NT, network node from a non-terrestrial network, in the following also referred to as NTN, (410);
decoding, by the processor, the SIB to obtain an explicit epoch time of the target cell before completing a handover procedure (420); and
performing, by the processor, an uplink, in the following also referred to as UL, synchronization with the target cell through adjusting an uplink transmit time according to the explicit epoch time (430).

6. An apparatus (210), comprising:
a transceiver (216) configured to wirelessly communicate with a non-terrestrial network, in the following also referred to as NTN; and
a processor (212) coupled to the transceiver (216) and configured to perform operations comprising:
receiving, via the transceiver (216), a system information block, in the following also referred to as SIB, of a target cell via a non-terrestrial, in the following also referred to as NT, network node of the NTN;
obtaining an explicit epoch time from the SIB of the target cell; and
performing an uplink, in the following also referred to as UL, synchronization with the target cell through adjusting an uplink transmit time according to the explicit epoch time.

7. The apparatus of Claim 6, wherein the processor (212) further performs operations comprising:
receiving, via the transceiver (216), a radio resource control, in the following also referred to as RRC, configuration signal configuring the SIB from a source cell.

8. The apparatus of Claim 7, wherein the processor (212) further performs operations comprising:
performing a handover procedure by handing over from the source cell to the target cell according to the SIB.

9. The apparatus of any one of Claims 6 to 8, wherein the explicit epoch time is one of a system frame number, in the following also referred to as SFN, a subframe index, a slot index, a symbol number, coordinated universal time, in the following also referred to as UTC, or any combinations thereof.

10. The method of any one of Claims 1 to 4, or the apparatus of any one of Claims 6 to 9, wherein the SIB comprises a satellite ephemeris of the NT network node.

11. The method of any one of Claims 1 to 4 and 10, or the apparatus of any one of Claims 6 to 10, wherein the satellite ephemeris comprises at least one of a satellite position vector, a satellite velocity vector, a feeder link timing advance, in the following also referred to as TA, parameter, a feeder link delay parameter, a plurality of satellite orbital parameters and trajectory information.

12. The method of any one of Claims 1 to 4, 10 and 11, or the apparatus of any one of Claims 6 to 11, wherein the satellite position vector and the satellite velocity vector are in earth-centered, earth-fixed, in the following also referred to as ECEF, coordinate system or another frame of reference.

13. An apparatus (210), comprising:
a transceiver (216) configured to wirelessly communicate with a non-terrestrial network, in the following also referred to as NTN; and
a processor (212) coupled to the transceiver (216) and configured to perform operations comprising:
receiving, via the transceiver (216), a system information block, in the following also referred to as SIB, from a target cell via a non-terrestrial, in the following also referred to as NT, network node of the NTN;
decoding the SIB to obtain an explicit epoch time of the target cell before completing a handover procedure; and
performing an uplink, in the following also referred to as UL, synchronization with the target cell through adjusting an uplink transmit time according to the explicit epoch time.

14. The method of Claim 5, or the apparatus of Claim 13, wherein a handover interruption time is a sum of at least one of a cell searching time for searching the target cell, an interruption uncertainty time in acquiring a first available PRACH occasion in the target cell, a processing time, a timing information acquiring time, a SIB decoding time, and a synchronization signal block, in the following also referred to as SSB, post-processing time.
